# EUROPÄISCHE PATENTSCHRIFT

(11) **EP 4 561 880 B1**
(45) Veröffentlichungstag und Bekanntmachung des Hinweises auf die Patenterteilung: **31.12.2025**
(21) Anmeldenummer: 23744137.3
(22) Anmeldetag: 14.07.2023
(51) Int. Cl.: B60T 17/08, F15B 15/10

(54) **BREMSZYLINDER FÜR EINE FAHRZEUGBREMSE**
BRAKE CYLINDER FOR A VEHICLE BRAKE
CYLINDRE DE FREIN POUR FREIN DE VÉHICULE

(30) Priorität: 29.07.2022 DE 102022119113
(43) Veröffentlichungstag der Anmeldung: 04.06.2025
(73) Patentinhaber: SAF-HOLLAND GmbH, 63856 Bessenbach (DE)
(72) Erfinder: SPIELMANN, Rolf, 97877 Wertheim-Bettingen (DE); HERTWIG, Michael, 63863 Eschau (DE)
(74) Vertreter: Müller Schupfner & Partner Patent- und Rechtsanwaltspartnerschaft mbB (Muc)
(86) Internationale Anmeldenummer: PCT/EP2023/069709
(87) Internationale Veröffentlichungsnummer: WO 2024/022852

(56) Entgegenhaltungen:
- WO-A1-2018/231688
- CN-A- 113 757 273
- JP-A- 2000 213 447
- US-A- 5 623 862
- US-A- 6 029 779
- US-B1- 6 497 313

## Beschreibung

Die Erfindung betrifft einen Bremszylinder für eine Fahrzeugbremse, insbesondere für eine Nutzfahrzeugbremse, sowie eine Fahrzeugbremse mit einem Bremszylinder.

Der Bauraum von Fahrzeugachsen, insbesondere Nutzfahrzeugachsen und/oder Anhängerachsen, ist in der Regel beschränkt. Zudem kann es vorteilhaft sein, die Federmitte der Achse, d.h. insbesondere den Abstand zwischen den Anknüpfungspunkten der Achse an der Radaufhängung über Lenker bzw. Federn, möglichst groß zu gestalten. Damit kann beispielsweise eine bessere Kippstabilität und/oder bei Fahrzeugen mit Lenkachsen ein größerer Lenkwinkel erreicht werden. Zudem kann der Lenkwinkel direkt abhängig von der Federmitte sein, da sich angrenzende Bauteile, z.B. Lenker, Bremsen, beim Lenken ggf. aufeinander zubewegen.

Vorteilhaft wäre an dieser Stelle eine Bauteilreduzierung, um insbesondere Kosten, Material und/oder Bauraum einsparen zu können. Die Bauteillänge von Bremszylindern, insbesondere Membran- bzw. Doppelmembranzylindern werden in der Regel durch ihre Runddrahtfedern und deren Federweg vorgegeben bzw. beeinflusst.

Die JP 2000 213 447 A offenbart Bremszylinder für eine Fahrzeugbremse, umfassend eine Federvorrichtung.

Die US 6 029 779 A offenbart eine Kombination aus automatischer Feststellbremse und Lenkspindel, welche für den Einsatz in einem selbstfahrenden Fahrzeug vorgesehen ist, das einen hebbaren Ausleger oder eine Arbeitsbühne trägt.

In der CN 113757273 A wird eine reibungshydraulische Mehrscheiben-Verbundbremsenträgerachse offenbart.

Die WO 2018/231688 A betrifft eine Bremsbetätigungsvorrichtung für eine Bremsanlage in einem Eisenbahnbremssystem umfassend einen Bremszylinder; eine Kolbenanordnung, die innerhalb des Bremszylinders in einer hin- und hergehenden Bewegung beweglich ist; eine Schubstange, die einen Gabelkopf und einen Gewindeabschnitt umfasst, wobei die Schubstange durch die Kolbenanordnung in einer hin- und hergehenden axialen Bewegung bewegt wird; einen Verriegelungsmechanismus, der auf dem Bremszylinder beweglich ist, um mit der Schubstange in Wirkverbindung zu treten, um die hin- und hergehende axiale Bewegung zu begrenzen; eine Verdrehsicherungsstange, die so konfiguriert ist, dass sie eine Drehbewegung der Kolbenanordnung und der Schubstange verhindert, wenn sich der Verriegelungsmechanismus im Eingriffszustand befindet; und eine Klemmanordnung, die mit dem Verriegelungsmechanismus in Eingriff steht, um die Schubstange mechanisch zu verriegeln.

Die US 6,497,313 B1 offenbart eine Nebenabtriebseinheit umfassend eine Schleppbremsanordnung, die automatisch aktiviert wird, wenn eine hydraulisch betätigte Kupplungsanordnung ausgekuppelt wird.

In der US 5,623,862 wird eine ausfallsichere Federbremsenbaugruppe mit großem Hub für Schwerlastfahrzeuge offenbart, welche ausgerichtete erste und zweite Becher umfasst, die nebeneinander befestigt sind, um ein Gehäuse für eine komprimierte Triebfeder zu bilden, die einen Federkolben vorspannt, eine hohle, rohrförmige Schubstange, deren eines Ende offen und dichtend, vorzugsweise durch Presspassung, am Federkolben befestigt ist, und deren anderes Ende geschlossen ist und dichtend durch den zweiten Becher verläuft, zur wechselseitigen Steuerung eines Bremsaktuators durch die Triebfeder, eine ringförmige, flexible Membran, deren Außenumfang radial dichtend neben den Bechern befestigt ist, und deren Innenumfang dichtend neben dem Außenumfang des Federkolbens befestigt ist, wobei der Zwischenabschnitt der Membran radial außerhalb des Federkolbens angeordnet ist.

Die WO 95/25030 A1 betrifft einen Bremszylinder für eine Fahrzeugbremse, umfassend eine Federvorrichtung, weobei die Federvorrichtung eine Wellenfeder ist, wobei der Bremszylinder ein Membranzylinder oder ein Doppelmembranzylinder ist.

Es ist daher Aufgabe der Erfindung, einen Bremszylinder bereitzustellen, bei dem der benötigte Bauraum verringert ist und/oder verringert werden kann.

Diese Aufgabe wird gelöst durch einen Bremszylinder gemäß der Ansprüche 1-12, eine Fahrzeugbremse gemäß Anspruch 13 und die Verwendung einer Wellenfeder in einem Bremszylinder gemäß Anspruch 14. Weitere Vorteile, Merkmale und vorteilhafte Ausführungsformen der Erfindung ergeben sich aus den abhängigen Ansprüchen, der Beschreibung sowie den Figuren und deren Beschreibung.

Erfindungsgemäß ist ein Bremszylinder für eine Fahrzeugbremse, insbesondere Nutzfahrzeugbremse, umfassend eine Federvorrichtung vorgesehen, wobei die Federvorrichtung insbesondere eine Wellenfeder ist. Erfindungsgemäß ist die Federvorrichtung dazu ausgestaltet, eine Bremskraft und/oder einer Rückstellkraft zum Lösen einer Bremse in einer Hubrichtung des Bremszylinders zu erzeugen. Zweckmäßiger weise umgibt die Federvorrichtung eine Kolbenstange des Bremszylinders. Hierdurch kann insbesondere Bauraum gespart werden. Während im Stand der Technik üblicherweise Runddrahtfedern zum Erzeugen einer Bremskraft oder Rückstellkraft verwendet werden, hat sich gezeigt, dass eine Wellenfeder eine Verkürzung des Bremsbetätigungsweges bzw. des Zylinderhubs, der zur Erzeugung der Bremskraft verwendet wird, bewirken kann, weil die Wellenfeder einen kürzeren Federweg und damit insgesamt weniger Platz benötigt um eine entsprechende Kraft erzeugen zu können. Die Wellenfeder kann insbesondere auch als Wellenringfeder bezeichnet werden. Die Wellenfeder kann beispielsweise gewellte Ringe aus Blech und/oder Flachdraht umfassen. Die gewellten Ringe können im unbelasteten Zustand Wellenbäuche bzw. Wellenmaxima und Wellenminima umfassen, wobei die Wellenbäuche insbesondere dazu ausgestaltet sind, in einem zusammengestauchten Zustand eine Federkraft zu erzeugen. Die Federkraft kann vorzugsweise in eine Verschieberichtung bzw. Hubrichtung erzeugbar sein, diese Richtung kann dabei insbesondere parallel zu der Erstreckungsrichtung der Kolbenstange bzw. einer Kolbenstange des Bremszylinders sein. Es können mehrere gewellte Ringe in Hubrichtung bzw. Verschieberichtung hintereinander angeordnet sein, wobei die Wellen insbesondere umlaufend um die Verschieberichtung bzw. Hubrichtung und/oder senkrecht zu der Verschieberichtung bzw. Hubrichtung verlaufen. Zweckmäßigerweise, insbesondere um einen großen Federweg zu erreichen, kontaktieren dabei die Wellenberge eines gewellten Rings der Federeinrichtung jeweils Wellentäler des oder eines benachbarten Wellenrings, welcher (grundlegend) auch als gewellter Ring bezeichnet werden kann. Ein Nutzfahrzeug im Sinne der Erfindung ist insbesondere ein Fahrzeug, welches ein zulässiges Gesamtgewicht von über 3,5 t, bevorzugt von über 7,5 t, besonders bevorzugt von über 15 t, und besonders stark bevorzugt von über 18 t aufweist. Das Nutzfahrzeug ist insbesondere ein straßentaugliches und oder ein straßengebundenes Fahrzeug. Vorteilhafterweise ist das Nutzfahrzeug ein Anhänger, insbesondere ein Sattelauflieger. Der Bremszylinder kann vorzugsweise ein luftbeaufschlagter, insbesondere druckluftbeaufschlagter, und/oder luftbeaufschlagbarer, insbesondere duckluftbeaufschlagbarer, Bremszylinder sein. Beispielsweise kann der Bremszylinder dafür ausgestaltet sein, im Einsatz als Teil einer Fahrzeugbremse per Druckluft als Betriebsbremse bedienbar zu sein. Zusätzlich oder alternativ kann der Bremszylinder dazu ausgestaltet sein, im Einsatz als Teil einer Fahrzeugbremse als Feststellbremse mittels einer Federkraft der Federvorrichtung aktivierbar zu sein. Mit anderen Worten kann die Federvorrichtung ein funktionaler Teil einer Feststellbremse sein. Die Fahrzeugbremse bzw. der Bremszylinder kann beispielsweise eine Membranbremse bzw. -bremszylinder oder eine Doppelmembranbremse bzw. -bremszylinder sein. Zusätzlich oder alternativ kann die Fahrzeugbremse beispielsweise eine Scheibenbremse, eine Schwimmsattelbremse und/oder eine Trommelbremse sein. Bei Trommelbremsen können sich Bauraumbeschränkungen beispielsweise auch auf das angrenzende Chassis ausdehnen, wodurch der erfindungsgemäße Bremszylinder aufgrund seiner bauraumsparenden Eigenschaften besonders vorteilhaft sein kann. Der Bremszylinder kann dazu ausgestaltet sein, dass mittels Druckluft, beispielsweise wirkend auf eine Membran der Membranbremse, der Bremskraft entgegengewirkt werden kann, sodass die durch die Federvorrichtung bewirkte Bremskraft aufgehoben werden kann. Mit anderen Worten kann der Bremszylinder dazu ausgestaltet sein, die Federvorrichtung, insbesondere mittels Druckluft, in einen belasteten Zustand zu versetzen, in dem durch die Federvorrichtung keine bremsende Wirkung verursacht wird. Es kann vorgesehen sein, dass die Federvorrichtung während einer Fahrt dauerhaft mittels Druckluft in einem belasteten Zustand gehalten wird, um keine Bremskraft zu erzeugen. Zusätzlich oder alternativ kann der Bremszylinder dazu ausgestaltet sein, im unbelasteten Zustand die Bremskraft zu erzeugen. Die Federvorrichtung kann dazu ausgestaltet sein, die Bremskraft auf einen Bremsmechanismus, z.B. auf einen Bremskolben, zu übertragen. Der Bremsmechanismus kann, ganz oder teilweise, Teil des Bremszylinders sein. Die Bremskraft der Federvorrichtung kann insbesondere über eine Federkraft der Federvorrichtung erzeugbar sein.

Bevorzugt ist ein Bremszylinder für eine Fahrzeugbremse, insbesondere Nutzfahrzeugbremse, vorgesehen, umfassend eine bzw. die Federvorrichtung, wobei die Federvorrichtung zum Erzeugen einer Bremskraft und/oder einer Rückstellkraft zum Lösen einer Bremse in einer Hubrichtung des Bremszylinders zumindest einen ersten Abschnitt aufweist, wobei der erste Abschnitt eine sich im Wesentlichen auf einer ersten Abschnittsebene erstreckende Grunderstreckung aufweist, wobei eine Normale der ersten Abschnittsebene im Wesentlichen parallel zu der Hubrichtung ausgerichtet ist und/oder um maximal 10° von der Hubrichtung abweicht, wobei der erste Abschnitt entlang seiner Grunderstreckung, insbesondere abwechselnd, erste Teilabschnitte und zweite Teilabschnitte aufweist, wobei die ersten Teilabschnitte im unbelasteten Zustand in positiver Hubrichtung von der ersten Abschnittsebene beabstandet sind, und wobei die zweiten Teilabschnitte im unbelasteten Zustand in negativer Hubrichtung von der ersten Abschnittsebene beabstandet sind, wobei die ersten und zweiten Teilabschnitte dazu ausgestaltet sind, im belasteten Zustand unter Erzeugung einer Federkraft einen geringeren Abstand zu der ersten Abschnittsebene aufzuweisen als im unbelasteten Zustand. Besonders bevorzugt ist der Bremszylinder für eine Nutzfahrzeugbremse, beziehungsweise für eine Fahrzeugbremse eines Nutzfahrzeugs vorgesehen. Die Federvorrichtung ist dabei insbesondere die bereits vorhergehend beschriebene Federvorrichtung. Die Federkraft kann der Bremskraft entsprechen. Vorteilhafterweise besteht bei einer mittels Federkraft betriebenen Feststellbremse nicht die Gefahr, dass, während das Fahrzeug abgestellt ist, bei einem Druckabfall die Bremskraft nachlässt. Die Bremskraft der Federvorrichtung kann insbesondere über eine Federkraft der Federvorrichtung erzeugbar sein. Die Bremskraft wirkt insbesondere in Hubrichtung, insbesondere in positiver Hubrichtung. Alternativ oder zusätzlich kann die Federvorrichtung dazu ausgestaltet sein, eine Bremse zu lösen. Beispielsweise kann es vorgesehen sein, dass eine Bremskraft, insbesondere einer Betriebsbremse, durch Druckluft oder einen anderen Mechanismus erzeugt wird, und die Federvorrichtung hat die Aufgabe, eine Rückstellkraft zur Lösung der Bremse zu erzeugen. Die Rückstellkraft kann insbesondere dazu ausgestaltet sein, eine Druckstange, welche auch als Kolbenstange bezeichnet werden kann oder ausgebildet sein kann, oder einen Bremskolben zurückzuziehen, wenn die Bremse nicht mit Druckluft beaufschlagt ist. Die Hubrichtung kann vorzugsweise die Richtung sein, in der der Bremsmechanismus betätigt wird, insbesondere die Richtung, in der ein Bremskolben beim Auslösen und/oder Feststellen der Bremse bewegt wird. Eine zu der Hubrichtung radial verlaufende Richtung wird im Rahmen dieser Erfindung als Radialrichtung bezeichnet. Eine kreisförmig um die Hubrichtung bzw. eine Verschiebeachse, insbesondere Mittelachse, des Bremszylinders und/oder senkrecht zu der Hubrichtung und der Radialrichtung verlaufende Richtung wird als Umfangsrichtung bezeichnet. Insbesondere kann es vorgesehen sein, dass der Bremsmechanismus zum Auslösen und/oder Feststellen in positive Hubrichtung bewegbar ist und zum Lösen der Bremse in negative Hubrichtung bewegbar ist. Die erste Abschnittsebene (oder analog eine oder mehrere weitere Abschnittsebenen) kann insbesondere dadurch definiert sein, dass im unbelasteten Zustand die ersten Teilabschnitte und die zweiten Teilabschnitte jeweils ungefähr gleich weit von der ersten Abschnittsebene entfernt sind. Die Beabstandung der ersten und zweiten Teilabschnitte von der Abschnittsebene kann sich auf einen maximalen Abstand und/oder auf einen durchschnittlichen Abstand beziehen. "Ungefähr" kann dabei eine Abweichungstoleranz von maximal 15%, bevorzugt, maximal 10% und besonders bevorzugt maximal 5%, des Gesamtabstands bedeuten.

Es kann vorgesehen sein, dass sich der mittlere Abstand der ersten und zweiten Teilabschnitte in Normalenrichtung der Abschnittsebene ungefähr auf null summiert. Die Normalenrichtung entspricht der Richtung der Normalen der Abschnittsebene. Die Normalenrichtung der Abschnittsebene kann gegenüber der Hubrichtung leicht, insbesondere um bis zu 10°, bevorzugt um bis zu 5°, gekippt sein. Dadurch können vorteilhafterweise Freiheiten bei der Gestaltung der Federvorrichtung ermöglicht werden, wobei die Bremskraft ggf. nicht oder nur unwesentlich beeinträchtigt wird. Vorzugsweise weisen die ersten Abschnitte und die zweiten Abschnitte im belasteten Zustand einen geringeren Abstand zu der ersten Abschnittsebene auf als im unbelasteten Zustand. Ein geringerer Abstand im Sinne der Erfindung kann auch bedeuten, dass kein Abstand mehr vorhanden ist. Mit anderen Worten kann der Bremszylinder derart ausgestaltet sein, dass die ersten und zweiten Teilabschnitte im belasteten Zustand keinen oder nur einen geringfügigen Abstand zu der ersten Abschnittsebene aufweisen. Ein geringfügiger Abstand kann ein Abstand sein, der weniger als 50%, bevorzugt weniger als 20%, besonders bevorzugt weniger als 10%, und besonders stark bevorzugt weniger als 5%, des Abstands im unbelasteten Zustand beträgt. Der Bremszylinder und/oder die Federvorrichtung kann so ausgestaltet sein, dass durch das Verringern des Abstands der ersten und zweiten Teilabschnitte von der Abschnittsebene eine Federkraft erzeugt wird, wobei die Federkraft insbesondere die Bremskraft und/oder Rückstellkraft ist und/oder erzeugt. Die Grunderstreckung muss nicht notwendigerweise auf einer Geraden verlaufen. Insbesondere kann die Grunderstreckung beispielsweise eine gekurvte Form aufweisen. Die Grunderstreckung kann einer, optional gekurvt verlaufenden, Längserstreckung des ersten Abschnitts entsprechen. Die Anordnung der ersten und die zweiten Teilabschnitte kann periodisch variierend vorgesehen sein. Die ersten und zweiten Teilabschnitte können entlang der Grunderstreckung, insbesondere abwechselnd, aufeinanderfolgen. Die Federvorrichtung kann - wie bereits dargelegt - insbesondere eine Wellenringfeder bzw. eine Wellenfeder sein. Es hat sich gezeigt, dass mit dem erfindungsgemäßen Bremszylinder eine Bauraumeinsparung erreicht werden kann. Dies kann dadurch ermöglicht werden, dass die erfindungsgemäße Federvorrichtung eine Verkürzung des Bremsbetätigungsweges bzw. des Zylinderhubs, der zur Erzeugung der Bremskraft verwendet wird, bewirken kann, weil die erfindungsgemäße Federvorrichtung weniger Platzbedarf hat als eine typischerweise im Stand der Technik verwendete Runddrahtfeder. Vorteilhafterweise kann dadurch auch die Länge des Bremszylinders verringert werden. Insbesondere kann eine Verminderung der Erstreckung der Bauteillänge in Hubrichtung um bis zu 50% erreicht werden im Vergleich mit üblichen Runddrahtfedern. Gegebenenfalls kann dieser Wert sogar noch weiter verbessert werden, beispielsweise bei Bremsen mit mehreren verbauten Federvorrichtungen. Es konnte festgestellt werden, dass der gemäß dem Stand der Technik verwendete bzw. durch den verwendeten Bremszylinder benötigte Hub bzw. Federweg oftmals größer ist, als für den eigentlichen Bremsvorgang seitens der Bremse notwendig ist. Durch die Bauteilverkürzung des Bremszylinders kann sich ein signifikanter Gestaltungsvorteil zur effizienteren Auslegung bzw. Ausgestaltung von Fahrzeugen ergeben, insbesondere im Bereich der Fahrzeugachsen. Zusätzlich kann der erfindungsgemäße Bremszylinder ein verringertes Gewicht aufweisen. Insbesondere kann somit das Gewicht der ungefederten Masse des Fahrzeugs verringert werden.

Gemäß einer Ausführungsform kann der Bremszylinder eine Befestigungsvorrichtung zur Befestigung an einer Fahrzeugbremse aufweisen. Die Befestigungsvorrichtung kann beispielsweise dazu konfiguriert sein, eine kraftschlüssige und/oder eine formschlüssige und/oder eine stoffschlüssige Befestigung zu ermöglichen. Die Befestigungsvorrichtung kann beispielsweise einen Bajonettverschluss und/oder eine Klemmbefestigung umfassen. Vorteilhafterweise kann mit der Befestigungsvorrichtung eine Bauteilintegration in eine Bremse, z.B. eine Scheibenbremse, erleichtert werden. Zudem kann durch die Befestigungsvorrichtung eine Nachrüstbarkeit des Bremszylinders in bestehende Bremsen bzw. Bremssystem erleichtert werden.

Vorteilhafterweise ist der erste Abschnitt der Federvorrichtung, insbesondere die komplette Federvorrichtung, umlaufend um eine im Wesentlichen in Hubrichtung orientierte Verschiebeachse, insbesondere Mittelachse, des Bremszylinders angeordnet. Insbesondere kann es vorgesehen sein, dass die Grunderstreckung des ersten Abschnitts in Umfangsrichtung angeordnet ist. Die Enden des ersten Abschnitts in Richtung der Grunderstreckung gesehen können aneinander anschließen und/oder aneinander befestigt sein. Es kann vorgesehen sein, dass weitere Abschnitte der Federvorrichtung, insbesondere alle Abschnitte der Federvorrichtung, umlaufend um eine im Wesentlichen in Hubrichtung orientierte Verschiebeachse, insbesondere Mittelachse, des Bremszylinders angeordnet sind. "Im Wesentlichen in Hubrichtung" kann dabei eine konstruktionsbedingte Abweichung einer parallelen Ausrichtung umfassen und/oder eine Abweichung von maximal 15°, bevorzugt 10°, besonders bevorzugt maximal 5°. Die Federvorrichtung kann vorzugsweise kreisförmig umlaufend um die Verschiebeachse, insbesondere Mittelachse, ausgerichtet sein. Dabei kann das Zentrum des Kreises insbesondere im Wesentlichen auf der Verschiebeachse liegen. "Im Wesentlichen" kann hierbei bedeuten, dass das Zentrum um maximal 15%, bevorzugt maximal 10%, besonders bevorzugt maximal 5%, der Erstreckung des Radius der Federvorrichtung von dem Zentrum entfernt ist. Vorteilhafterweise kann mit einer umlaufenden Anordnung eine besonders effiziente Bauraumoptimierung, insbesondere auch senkrecht zu der Hubrichtung bzw. in Radialrichtung, ermöglicht werden. Zudem kann über die Radialrichtung hinweg eine besonders gleichmäßige Federkraft in Hubrichtung erzeugbar sein.

Zweckmäßigerweise umfasst der erste Abschnitt zumindest einen Zwischenabschnitt, der einen der ersten Teilabschnitte mit einem der zweiten Teilabschnitte, insbesondere elastisch, verbindet und der die erste Abschnittsebene schneidet. Der zumindest eine Zwischenabschnitt kann vorzugsweise zwischen jeweils einem ersten Teilabschnitt und einem zweiten Teilabschnitt angeordnet sein, die, insbesondere in Umfangsrichtung, benachbart zueinander angeordnet sind. Benachbart kann dabei insbesondere bedeuten, dass kein weiterer erster oder zweiter Teilabschnitt zwischen den beiden benachbarten Teilabschnitten angeordnet ist und/oder dass kein anderer Teilabschnitt näher an dem ersten bzw. zweiten Teilabschnitt ist als jeweils der andere der beiden benachbarten Teilabschnitten. Vorteilhafterweise kann mit dem zumindest einen Zwischenabschnitt eine besonders effiziente elastische Federkraft durch relatives Bewegen der beiden Teilabschnitte in Hubrichtung erzeugt werden. Der zumindest eine Zwischenabschnitt kann in Radialrichtung zentral innen zwischen den ersten und zweiten Teilabschnitten angeordnet sein und/oder in Radialrichtung außerhalb der Teilabschnitte angeordnet sein. Besonders bevorzugt kann der zumindest eine Zwischenabschnitt in Umfangsrichtung zwischen zwei Teilabschnitten angeordnet sein. Der erste Abschnitt kann insbesondere eine Vielzahl von Zwischenabschnitten umfassen, die jeweils in Richtung der Grunderstreckung aufeinanderfolgende erste und zweite Teilabschnitte verbinden. Besonders bevorzugt kann dabei die Grunderstreckung in Umfangsrichtung verlaufen. Insbesondere können in Umfangsrichtung jeweils abwechselnd erste Teilabschnitte und zweite Teilabschnitte vorgesehen sein, wobei die ersten Teilabschnitte jeweils mit den in Umfangsrichtung folgenden zweiten Teilabschnitten durch die Zwischenabschnitte verbunden sind und umgekehrt. Vorteilhafterweise kann es eine solche Anordnung mit Zwischenabschnitten ermöglichen, eine besonders flach verlaufende Federkennlinie der Federvorrichtung zu erhalten. Diese kann besonders gut geeignet für die Anwendung in Bremszylindern sein, insbesondere für den Feststellbremsteil des Bremszylinders. Zudem kann durch eine solche Anordnung der Bauraum besonders effizient verringert werden.

Vorteilhafterweise sind der erste Abschnitt und/oder ein oder mehrere weitere Abschnitte der Federvorrichtung im Wesentlichen als gewellter Ring bzw. gewellte Ringe und/oder Ringscheibe bzw. Ringscheiben ausgebildet ist/sind, wobei Wellenbäuche der gewellten Ringe und/oder Ringscheiben den ersten und zweiten Teilabschnitten entsprechen, wobei die Ringe und/oder Ringscheiben insbesondere derart angeordnet sind, dass der Mittelpunkt der Ringe/Ringscheiben im Wesentlichen auf einer in Hubrichtung orientierten Verschiebeachse, insbesondere Mittelachse, des Bremszylinders angeordnet ist. Wellenbäuche bezeichnen dabei insbesondere die Maxima und Minima der gewellten Ringe bzw. Ringscheiben. Die Maxima und Minima der Wellen entsprechen insbesondere dem maximalen Abstand des ersten und oder weiteren Abschnitts von der ersten und/oder weiteren Abschnittsebene in Hubrichtung gesehen. Der Verlauf der Wellen kann dabei vorzugsweise in Richtung der Grunderstreckung ausgerichtet sein. Insbesondere kann der Kreisverlauf der Ringe bzw. Ringscheiben im Wesentlichen der um die Verschiebeachse, insbesondere Mittelachse, verlaufenden Umfangsrichtung entsprechen. Bereiche zwischen den Wellenbäuchen können insbesondere den Zwischenabschnitten wie hierin beschreiben entsprechen. Vorteilhafterweise können gewellte Ringe bzw. Ringscheiben eine konzeptionell und/oder fertigungstechnisch besonders einfache und hinsichtlich der Federkraft effiziente Möglichkeit darstellen, die erfindungsgemäße Federvorrichtung bereitzustellen.

Zweckmäßigerweise weist die Federvorrichtung zumindest einen weiteren Abschnitt, insbesondere eine Vielzahl weiterer Abschnitte, entsprechend dem ersten Abschnitt auf, wobei der erste Abschnitt und der zumindest eine weitere Abschnitt in Hubrichtung hintereinander, insbesondere aneinander angrenzend, angeordnet sind. Vorteilhafterweise kann mit den mehreren erfindungsgemäßen Abschnitten eine hinsichtlich Material- und Bauraumbedarf besonders effiziente Verstärkung der Gesamt-Federkraft ermöglicht werden. Die weiteren Abschnitte können entsprechend dem ersten Abschnitt jeweils weitere Abschnittsebenen aufweisen, wobei die weiteren Abschnittsebenen vorzugsweise parallel zu der ersten Abschnittsebenen angeordnet sein können. Die weiteren Abschnitte können entsprechend dem ersten Abschnitt weitere erste und zweite Teilabschnitte sowie optional weitere Zwischenabschnitte aufweisen. Alle Vorteile und Merkmale in Bezug auf den ersten Abschnitt können analog auf die weiteren Abschnitte übertragen werden.

**In** einer vorteilhaften Ausführungsform kontaktieren in Hubrichtung benachbarte Abschnitte jeweils einander und/oder sind miteinander verbunden. Insbesondere kann vorgesehen sein, dass jeweils die ersten Teilabschnitte eines Abschnitts jeweils die zweiten Teilabschnitte des in Hubrichtung gesehen nächsten Abschnitts kontaktieren bzw. mit diesen verbunden sind. Unter kontaktieren kann dabei insbesondere "sich berühren" verstanden werden. Durch das Kontaktieren bzw. die Verbindung kann die Federkraft gegebenenfalls weiter verstärkt werden.

**In** einer zusätzlich oder alternativ bevorzugten Ausführungsform liegen sich zwischen zwei benachbarten Abschnittsebenen angeordnete erste und zweite Teilabschnitte zweier benachbarter Abschnitte jeweils paarweise, insbesondere im Punkt des größten Abstands von ihrer Abschnittsebene, direkt gegenüber, wobei insbesondere sich gegenüberliegende erste und zweite Teilabschnitte sich im unbelasteten und belasteten Zustand kontaktieren. Die sich kontaktierenden ersten und zweiten Teilabschnitte können insbesondere, insbesondere stoffschlüssig, miteinander verbunden bzw. aneinander angeschlossen sein. Vorteilhafterweise kann mit dieser Ausführungsform eine besonders stabile Federvorrichtung ermöglicht werden.

**In** einer zusätzlich oder alternativ bevorzugten Ausführungsform weisen die Abschnitte auf den Abschnittsebenen eine maximale Radialerstreckung in einer zu der Hubrichtung senkrechten Radialrichtung auf, wobei die maximale Radialerstreckung aufeinanderfolgender Abschnitte in positiver oder negativer Hubrichtung variabel ausgebildet ist. Besonders bevorzugt ist die maximale Radialerstreckung aufeinanderfolgender Abschnitte in positiver oder negativer Hubrichtung monoton, insbesondere streng monoton, abnehmend ausgebildet, wobei die Federvorrichtung insbesondere konusartig mit einer im Wesentlichen in Hubrichtung verlaufenden Konusachse ausgebildet ist. Die maximale Radialerstreckung wird dabei insbesondere durch die in Radialrichtung gesehen größte Erstreckung des jeweiligen Abschnitts definiert. Sind die Abschnitte ringförmig bzw. scheibenförmig ausgebildet, so kann die maximale Radialerstreckung dem Kreisdurchmesser der Ringe bzw. Scheiben entsprechen. In Hubrichtung gesehen kann das Ende der Federvorrichtung mit geringerer maximaler Radialerstreckung an eine Membran des Membranzylinders angrenzen. Vorteilhafterweise kann mit einer Federvorrichtung mit einer abnehmenden Radialerstreckung eine verbesserte Bauraumanpassung ermöglicht werden. Insbesondere kann mit einer konusartigen Ausbildung eine mit zunehmender Belastung progressiv ansteigende Federkennlinie realisierbar sein.

In einer zusätzlich oder alternativ bevorzugten Ausführungsform weisen die Abschnitte auf den Abschnittsebenen eine maximale Radialerstreckung in einer zu der Hubrichtung senkrechten Radialrichtung auf, wobei die maximale Radialerstreckung aufeinanderfolgender Abschnitte in positiver oder negativer Hubrichtung gleich ausgebildet ist, insbesondere derart, dass die Federvorrichtung zylindrisch mit einer im Wesentlichen in Hubrichtung verlaufenden Zylinderachse ausgebildet ist. Die maximale Radialerstreckung kann insbesondere wie oben definiert sein. Mit dieser Ausführungsform kann gegebenenfalls ein besonders starker Bremseffekt erzeugt werden. Insbesondere kann eine zylindrische Bauform eine relativ konstante und/oder stark ansteigende Federkennlinie ermöglichen.

Vorteilhafterweise umfasst der Bremszylinder zwei Federvorrichtungen jeweils wie hierin beschrieben, wobei die Federvorrichtungen in Hubrichtung zueinander beabstandet sind. Es kann vorgesehen sein, dass nicht zu den Federvorrichtungen gehörige Komponenten, z.B. eine Membran, zwischen den Federvorrichtungen angeordnet sind. Mit anderen Worten kann es sich insbesondere um zwei separate Federvorrichtungen handeln. Beispielsweise kann eine der Federvorrichtungen Teil einer Feststellbremse sein und die andere der Federvorrichtungen kann Teil einer Betriebsbremse sein. Vorteilhafterweise können somit mehrere Arten von Bremsen besonders platzsparend kombiniert werden.

In einer zusätzlich oder alternativ bevorzugten Ausführungsform umfasst der Bremszylinder eine Federvorrichtung mit variabler maximaler Radialerstreckung wie hierin beschrieben, insbesondere eine konusförmige oder konusartige Federvorrichtung, und eine zylindrische Federvorrichtung. Die beiden Federvorrichtungen können insbesondere in Hubrichtung voneinander beabstandet sein. Vorteilhafterweise kann somit beispielsweise eine bauraumsparende bzw. bauraumangepasste variable Federvorrichtung mit einer zylindrischen Federvorrichtung mit besonders starker Federkraft kombinierbar sein. Damit kann insbesondere eine besonders gute Anpassung an den zur Verfügung stehenden Bauraum erfolgen bei gleichzeitigem Erreichen einer hohen Federkraft.

In einer vorteilhaften Ausführungsform steht eine Erstreckung in Hubrichtung einer ersten der zwei Federvorrichtungen, insbesondere der konusartigen Federvorrichtung, zu einer Erstreckung in Hubrichtung einer zweiten der zwei Federvorrichtungen, insbesondere der zylindrischen Federvorrichtung, in einem Verhältnis von 0,3 bis 0,9, bevorzugt 0,5 bis 0,8, besonders bevorzugt 0,6 bis 0,7. Ein solches Verhältnis hat sich als besonders günstig hinsichtlich einer Einsparung von Bauraum erwiesen. Ein Verhältnis von 0,5 bis 0,8 kann besonders günstig sein um eine besonders gut brauchbare Federkraft sowohl der Konusfeder als auch der Zylinderfeder zu erlangen. Ein Verhältnis von 0,6 bis 0,7 kann zudem eine besonders günstige Einteilung für das Vorsehen einer Feststellbremse und einer Betriebsbremse sein.

In einer vorteilhaften Ausführungsform gehen benachbarte Abschnitte spiralartig ineinander über. Die Normalen der Abschnitte können gegenüber der Hubrichtung leicht geneigt sein, insbesondere um bis zu 10° geneigt sein, wobei die jeweiligen Abschnitte insbesondere im Wesentlichen parallel untereinander angeordnet sein können. Die Spirale kann sich vorzugsweise um eine in Hubrichtung verlaufende Verschiebeachse, insbesondere Mittelachse, des Bremszylinders herum erstrecken. Ein einzelner Abschnitt kann vorzugsweise einer Umdrehung der Spirale entsprechen. Durch eine spiralartige Ausführung kann vorteilhafterweise eine erhöhte Federkraft erreichbar sein, wodurch die Bremskraft besonders effizient erzeugbar sein kann.

Zweckmäßigerweise ist der Bremszylinder ein Membranzylinder oder ein Doppelmembranzylinder. Der Membranzylinder kann vorzugsweise eine Bremszylindergröße von 10 bis 30", bevorzugt 16" bis 24", aufweisen. Der Doppelmembranzylinder kann vorzugsweise eine Bremszylindergröße von 10"/18" bis 30"/40", bevorzugt 16"/24" bis 20"/30" aufweisen. Eine Bauraumoptimierung ist besonders effektiv bei Membranzylindern möglich. Insbesondere kann ein Doppelmembranzylinder in doppelter Hinsicht von der Bauraumoptimierung profitieren, wenn zwei Federvorrichtungen in dem Doppelmembranzylinder vorgesehen sind. Eine der zwei Federvorrichtungen kann dabei z.B. im Rahmen einer Betriebsbremse verwendet werden während eine weitere Federvorrichtung z.B. als Feststellbremse dienen kann.

Der Membranzylinder kann ein Zylindergehäuse aufweisen, wobei die Federvorrichtung in dem Zylindergehäuse angeordnet sein kann. Das Zylindergehäuse kann einen Federbereich, in dem die Federvorrichtung angeordnet ist, und einen Druckluftbereich, der zum Einfüllen von Druckluft ausgestaltet ist, aufweisen. Der Druckluftbereich kann einen Drucklufteingang zum Einfüllen von Druckluft aufweisen. Der Drucklufteingang kann insbesondere in Hubrichtung ausgerichtet sein. Der Federbereich und der Druckluftbereich können durch eine Membran abgetrennt sein, wobei die Membran den Federbereich und den Druckluftbereich luftdicht voneinander separiert, wobei die Membran dazu ausgestaltet ist, die Federvorrichtung durch Belastung zu komprimieren, wenn Druckluft in den Druckluftbereich eingeführt wird, wobei sich insbesondere der Druckluftbereich durch Verschieben der Membran vergrößert und der Federbereich verkleinert, wenn Druckluft in den Druckluftbereich eingeführt wird. Der Membranzylinder kann eine Druckstange oder Kolbenstange zum Erzeugen einer Bremskraft umfassen, wobei die Druckstange, welche auch eine Kolbenstange sein kann, mit der Federvorrichtung und oder der Membran derart verbunden ist, dass die Druckstange beim Kontrahieren und Extrahieren der Federvorrichtung in Hubrichtung bewegt wird. Die Druckstange kann teilweise in dem Zylindergehäuse, insbesondere in dem Druckluftbereich, und teilweise außerhalb des Zylindergehäuses angeordnet sein, wobei die Druckstange insbesondere dazu ausgestaltet ist, beim Kontrahieren und/oder Extrahieren der Federvorrichtung teilweise aus dem Zylindergehäuse hinausbewegt zu werden. Der Membranzylinder kann einen Faltenbalg umfassen, der die Druckstange außerhalb des Zylindergehäuses umgibt. Am der Federvorrichtung abgewandten Ende der Druckstange kann ein Gabelkopf angeordnet sein, der zum Aktiveren einer Bremse konfiguriert ist. Die Druckstange kann im Wesentlichen entlang der Verschiebeachse des Membranzylinders ausgerichtet sein. Die Federvorrichtung kann in Hubrichtung gesehen mit einem ersten Ende die Membran kontaktieren und/oder an der Membran befestigt sein und mit einem dem ersten Ende in Hubrichtung gesehen gegenüberliegenden zweiten Ende mit dem Zylindergehäuse kontaktieren bzw. an dem Zylindergehäuse befestigt sein. Der Membranzylinder kann beispielsweise dazu ausgestaltet sein, dass bei Einführen von Druckluft in den Druckluftbereich die Federvorrichtung mittels der Membran belastet und komprimiert wird, sodass die Druckstange gegen die Rückstellkraft der Federvorrichtung aus dem Zylindergehäuse hinausgeschoben wird, um eine Bremskraft und/oder einen Bremseffekt zu erzeugen, und dass bei Auslassen der Druckluft aus dem Druckluftbereich die Membran und die Druckstange durch die Rückstellkraft der Federvorrichtung zurückgeschoben werden, um den Bremseffekt zu beenden.

Der Doppelmembranzylinder kann ein zweiteiliges Zylindergehäuse mit einem ersten Zylindergehäuseteil und einem zweiten Zylindergehäuseteil aufweisen, wobei eine erste Federvorrichtung, insbesondere wie hierin beschrieben, in dem ersten Zylindergehäuseteil angeordnet sein kann. Das erste Zylindergehäuseteil kann einen ersten Federbereich, in dem die erste Federvorrichtung angeordnet ist, und einen ersten Druckluftbereich, der zum Einfüllen von Druckluft ausgestaltet ist, aufweisen. Der erste Druckluftbereich kann einen ersten Drucklufteingang zum Einfüllen von Druckluft aufweisen. Der erste Drucklufteingang kann insbesondere in Radialrichtung ausgerichtet sein. Der erste Federbereich und der erste Druckluftbereich können durch eine Membran abgetrennt sein, wobei die Membran den ersten Federbereich und den ersten Druckluftbereich luftdicht voneinander separiert, wobei die Membran dazu ausgestaltet ist, die erste Federvorrichtung durch Belastung zu komprimieren, wenn Druckluft in den ersten Druckluftbereich eingeführt wird, wobei sich insbesondere der erste Druckluftbereich durch Verschieben der Membran vergrößert und der erste Federbereich verkleinert, wenn Druckluft in den ersten Druckluftbereich eingeführt wird. Der Doppelmembranzylinder kann eine erste Druckstange zum Erzeugen einer Bremskraft umfassen, wobei die erste Druckstange mit der ersten Federvorrichtung und oder der Membran derart verbunden ist, dass die erste Druckstange beim Kontrahieren und Extrahieren der ersten Federvorrichtung in Hubrichtung bewegt wird. Die erste Druckstange kann teilweise in dem Zylindergehäuse, insbesondere in dem ersten Druckluftbereich, und teilweise außerhalb des Zylindergehäuses angeordnet sein, wobei die erste Druckstange insbesondere dazu ausgestaltet ist, beim Kontrahieren und/oder Extrahieren der ersten Federvorrichtung teilweise aus dem Zylindergehäuse hinausbewegt zu werden. Der Doppelmembranzylinder kann einen Faltenbalg umfassen, der die erste Druckstange außerhalb des Zylindergehäuses umgibt. Am der ersten Federvorrichtung abgewandten Ende der ersten Druckstange kann ein Gabelkopf angeordnet sein, der zum Aktiveren einer Bremse konfiguriert ist. Die erste Druckstange kann im Wesentlichen entlang der Verschiebeachse des Doppelmembranzylinders ausgerichtet sein. Die erste Federvorrichtung kann in Hubrichtung gesehen mit einem ersten Ende die Membran kontaktieren und/oder an der Membran befestigt sein und mit einem dem ersten Ende in Hubrichtung gesehen gegenüberliegenden zweiten Ende mit dem Zylindergehäuse kontaktieren bzw. an dem Zylindergehäuse befestigt sein. Der Doppelmembranzylinder kann beispielsweise dazu ausgestaltet sein, dass bei Einführen von Druckluft in den ersten Druckluftbereich die ersten Federvorrichtung mittels der Membran belastet und komprimiert wird, sodass die erste Druckstange gegen die Rückstellkraft der ersten Federvorrichtung aus dem Zylindergehäuse hinausgeschoben wird, um eine Bremskraft und/oder einen Bremseffekt zu erzeugen, und dass bei Auslassen der Druckluft aus dem Druckluftbereich die Membran und die Druckstange durch die Rückstellkraft der Federvorrichtung zurückgeschoben werden, um den Bremseffekt zu beenden. In dem zweiten Zylindergehäuseteil kann ein zweiter Federbereich und ein zweiter Druckluftbereich, der zum Einfüllen von Druckluft ausgestaltet ist, vorgesehen sein, wobei insbesondere der zweite Druckluftbereich zwischen dem ersten Zylindergehäuseteil und dem zweiten Federbereich angeordnet ist. In dem zweiten Federbereich kann eine in Hubrichtung aktivierbare zweite Federvorrichtung, insbesondere wie hierin beschrieben, vorgesehen sein. Der zweite Druckluftbereich kann einen zweiten Drucklufteingang zum Einfüllen von Druckluft aufweisen. Der zweite Drucklufteingang kann insbesondere in Radialrichtung ausgerichtet sein.

Der zweite Federbereich und der zweite Druckluftbereich können luftdicht voneinander derart separiert sein, sodass die zweite Federvorrichtung durch Belastung komprimiert wird, wenn Druckluft in den zweiten Druckluftbereich eingeführt wird, sodass sich insbesondere der zweite Druckluftbereich durch Verschieben und/oder Verkleinern des zweiten Federbereichs vergrößert, wenn Druckluft in den zweiten Druckluftbereich eingeführt wird. Der Doppelmembranzylinder kann eine zweite Druckstange umfassen, wobei die zweite Druckstange die Membran kontaktiert und dazu ausgestaltet ist, mit dem zweiten Federbereich in Hubrichtung verschoben zu werden, sodass die zweite Druckstange beim Kontrahieren und Extrahieren der zweiten Federvorrichtung in Hubrichtung bewegt wird und beim Extrahieren der zweiten Federvorrichtung die erste Federvorrichtung kontrahiert, sodass die eine Feststellbremskraft mittels der ersten Druckstange erzeugt wird.

Die zweite Druckstange kann im Wesentlichen entlang der Verschiebeachse des Doppelmembranzylinders ausgerichtet sein. Die zweite Druckstange kann dabei eine Kolbenstange sein. Die zweite Federvorrichtung kann dabei die vorhergehend und nachfolgend in Bezug zu der Federvorrichtung offenbarten Merkmale, Vorteile oder Ausgestaltungen aufweisen. Die zweite Federvorrichtung kann in Hubrichtung gesehen mit einem zu dem zweiten Druckluftbereich gewandten Ende des zweiten Federbereichs kontaktieren und/oder an diesem befestigt sein und mit dem anderen Ende mit dem Zylindergehäuse kontaktieren bzw. an dem Zylindergehäuse befestigt sein. Der Doppelmembranzylinder kann beispielsweise dazu ausgestaltet sein, dass bei Einführen von Druckluft in den zweiten Druckluftbereich die zweite Federvorrichtung belastet und komprimiert wird, sodass die zweite Druckstange zurückgeschoben wird, sodass die erste Federvorrichtung nicht durch die zweite Federvorrichtung belastet wird und dass bei Auslassen der Druckluft aus dem Druckluftbereich die zweite Druckstange durch die Federkraft der zweiten Federvorrichtung vorgeschoben wird, sodass die erste Federvorrichtung komprimiert wird und der Bremseffekt erzeugt wird. Vorteilhafterweise kann der Doppelmembranzylinder dazu ausgebildet sein eine Bremskraft einer Betriebsbremse und eine Bremskraft einer Feststellbremse zu erzeugen. Insbesondere kann die erste Federvorrichtung dazu ausgestaltet sein, eine Betriebsbremse automatisch zu lösen, wenn keine Druckluft in dem ersten Druckluftbereich ist, wobei die zweite Federvorrichtung dazu ausgestaltet sein kann, eine Feststellbremse zu aktivieren, wenn keine Druckluft in dem zweiten Druckluftbereich ist.

Vorteilhafterweise ist die Federvorrichtung zumindest teilweise, insbesondere vollständig, aus Metall gefertigt, wobei insbesondere der erste Abschnitt der Federvorrichtung aus Metall gefertigt ist. Die Federvorrichtung kann beispielsweise aus Stahl gefertigt sein. Eine Fertigung aus Metall kann für die Verwendung in Bremszylindern, insbesondere bei Nutzfahrzeugen, von Vorteil sein. Beispielsweise kann eine Federvorrichtung aus Metall eine erhöhte Stabilität und/oder Zuverlässigkeit der Federvorrichtung ermöglichen.

Zweckmäßigerweise ist die Federvorrichtung abschnittsweise, insbesondere zumindest der erste Abschnitt, aus Blech gefertigt, wobei insbesondere auch die weiteren Abschnitte aus Blech gefertigt sind. Eine Fertigung aus Blech kann insbesondere in Hubrichtung eine besonders platzsparende Ausführung der Federvorrichtung ermöglichen. Vorteilhafterweise kann das Verhältnis einer Erstreckung des Blechs in Hubrichtung zu einer Erstreckung des ersten Abschnitts in Radialrichtung geringer als 0,3, bevorzugt geringer als 0,1, besonders bevorzugt geringer als 0,05 sein, wobei eine Untergrenze dieses Verhältnisses insbesondere größer als 0,001, bevorzugt größer als 0,005, besonders bevorzugt größer als 0,01, sein kann. Ein Verhältnis geringer als 0,3 (und bevorzugt größer als 0,001) kann eine besonders platzsparende Ausführung ermöglichen. Bei einem Verhältnis im Bereich von weniger als 0,1 (und bevorzugt größer als 0,005) kann zudem ein Einsparen von Gewicht und Material bei gleichzeitig immer noch guter Stabilität ermöglichen. Ein Verhältnis von weniger als 0,05 (und bevorzugt größer als 0,01) kann hierbei besonders effizient sein.

Vorteilhafterweise steht im unbelasteten Zustand ein Durchmesser der Federvorrichtung in Radialrichtung zu einer Erstreckung der Federvorrichtung in Hubrichtung in einem Verhältnis von 0,5 bis 5, bevorzugt 1 bis 3, besonders bevorzugt 1,1 bis 2,0. Vorteilhafterweise kann mit diesem Verhältnis eine besonders platzsparende Ausführung ermöglicht werden. Dabei bietet insbesondere ein Verhältnis von 1 bis 3 eine besonders effiziente Kombination aus eingespartem Bauraum und Stabilität. Ein Verhältnis von 1,1 bis 2,0 kann insbesondere für Nutzfahrzeugbremsen besonders günstig sein.

Zweckmäßigerweise steht ein Durchmesser der Federvorrichtung in Radialrichtung zu einem Federweg der Federvorrichtung in einem Verhältnis von 0,5 bis 20, bevorzugt 1 bis 10, besonders bevorzugt 2 bis 8, steht. Damit kann insbesondere eine besonders gute Bremskraft erzielbar sein.

Vorteilhafterweise umfasst die Federvorrichtung 2 bis 20, bevorzugt 3 bis 10, besonders bevorzugt 6 bis 8, Abschnitte, wobei die Abschnitte insbesondere in Hubrichtung hintereinander angeordnet sind, wobei die Abschnitte insbesondere der erste Abschnitt und die weiteren Abschnitte sind. Es hat sich herausgestellt, dass 2 bis 20 Abschnitte eine gute Bremskraft erzeugen können. Bei 3 bis 10 Abschnitten kann zudem eine gute Einsparung von Bauraum erzielbar sein, ohne eine benötigte Bremskraft zu unterschreiten. Als besonders effizient können sich dabei 6 bis 8 Abschnitte herausstellen.

Zweckmäßigerweise umfasst der der erste Abschnitt 2 bis 20, bevorzugt 3 bis 10, besonders bevorzugt 4 bis 8, erste Teilabschnitte und/oder 2 bis 20, bevorzugt 3 bis 10, besonders bevorzugt 4 bis 8, zweite Teilabschnitte. Die weiteren Abschnitte können eine entsprechende Anzahl von ersten und/oder zweiten Teilabschnitten, insbesondere eine in den gleichen Bereichen liegende Anzahl von Teilabschnitten, aufweisen. Bei einer konischen Ausführungsform kann die Anzahl der Teilabschnitte der weiteren Abschnitte optional variieren, z.B. mit geringerem Durchmesser des Konus, geringer werden. 2 bis 20 Teilabschnitte können dabei besonders gut anordenbar in einem Bremszylinder sein. 3 bis 10 Teilabschnitte können dabei eine besonders gute Kombination aus Stabilität und Bremskraft ermöglichen. 4 bis 8 Teilabschnitte können diesbezüglich gerade für Nutzfahrzeugbremsen besonders vorteilhaft sein.

Ein weiterer Aspekt der Erfindung ist eine Fahrzeugbremse, insbesondere Nutzfahrzeugbremse, mit einem Bremszylinder wie hierin beschrieben. Alle Vorteile und Merkmale des Bremszylinders können analog auf die Fahrzeugbremse übertragen werden und umgekehrt. Die Fahrzeugbremse kann beispielsweise eine Scheibenbremse, eine Schwimmsattelbremse und/oder eine Trommelbremse sein.

Ein weiterer Aspekt der Erfindung ist eine Verwendung einer Wellenfeder, insbesondere einer Federvorrichtung wie hierin beschrieben, für eine Nutzfahrzeugbremse. Erfindungsgemäß wird die Federvorrichtung dazu verwendet, eine Bremskraft und/oder einer Rückstellkraft zum Lösen einer Bremse in einer Hubrichtung des Bremszylinders zu erzeugen. Alle Vorteile und Merkmale des Bremszylinders und der Fahrzeugbremse können analog auf die die Anwendung übertragen werden und umgekehrt.

Weitere Vorteile und Merkmale der Erfindung ergeben sich aus der nachfolgenden Beschreibung bevorzugter Ausführungsformen des erfindungsgemäßen Gegenstands mit Bezug auf die beigefügten Figuren. Die folgende Beschreibung dient lediglich der Verdeutlichung der Erfindung und sollte nicht derart aufgefasst werden, dass durch sie die beiliegenden Ansprüche auf eine der Ausführungsformen beschränkt werden.
- **Fig. 1**: eine Schnittdarstellung eines Bremszylinders gemäß einer ersten Ausführungsform der Erfindung,
- **Fig. 2**: eine Schnittdarstellung eines Bremszylinders gemäß einer zweiten Ausführungsform der Erfindung.

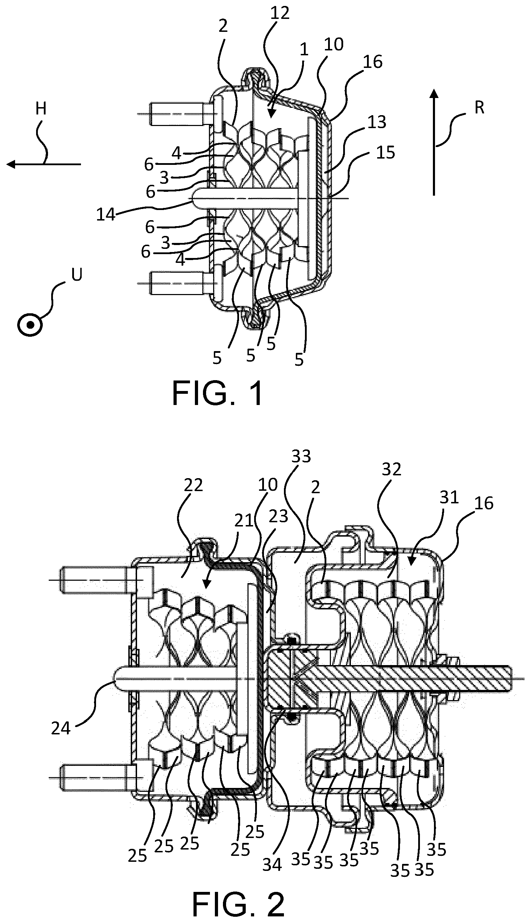

**Figur 1** zeigt eine Schnittdarstellung eines Bremszylinders gemäß einer ersten Ausführungsform der Erfindung. Der Bremszylinder ist in dieser Ausführungsform ein Membranzylinder. Der Membranzylinder weist eine Federvorrichtung 1 zum Erzeugen einer Rückstellkraft zum Lösen einer Bremse in einer Hubrichtung H des Bremszylinders auf, wobei die Federvorrichtung 1 hier im unbelasteten Zustand gezeigt ist. Die Federvorrichtung 1 ist umlaufend um eine in Hubrichtung H orientierte Verschiebeachse des Bremszylinders angeordnet. Die Federvorrichtung 1 hat einen ersten Abschnitt 2 und mehrere weitere Abschnitte 5. Die weiteren Abschnitte 5 sind grundsätzlich analog zu dem ersten Abschnitt 2 aufgebaut. Der erste Abschnitt 2 weist in Richtung seiner Grunderstreckung, welche hier in Umfangsrichtung U verläuft, mehrere erste Teilabschnitte 3 und zweite Teilabschnitte 4 auf. Die ersten Teilabschnitte 3 entsprechen jeweils Wellenbäuchen des wellenringförmig gestalteten ersten Abschnitts 2, wobei die Wellenbäuche in positiver Hubrichtung H ausgelenkt sind und daher auch als Wellenberge bezeichnet werden können. Die zweiten Teilabschnitte 4 entsprechen jeweils Wellenbäuchen des wellenringförmig gestalteten ersten Abschnitts 2, wobei die Wellenbäuche in negativer Hubrichtung H ausgelenkt sind. Daher können diese Wellenbäuche auch als Wellentäler bezeichnet werden. Die erste Abschnittsebene (nicht eingezeichnet) entspricht dabei in diesem Beispiel einer Ebene, deren Normale in Hubrichtung H verläuft und deren Kante in dieser Darstellung in Radialrichtung R verläuft, wobei die erste Abschnittsebene in Hubrichtung H gesehen im Zentrum des ersten Abschnitts 2, nämlich genau mittig zwischen den ersten Teilabschnitten 3 und den zweiten Teilabschnitten 4, angeordnet ist. Die ersten Teilabschnitte 3 und die zweiten Teilabschnitte 4 sind jeweils durch Zwischenabschnitte 6 elastisch miteinander verbunden, wobei die Zwischenabschnitte 6 die erste Abschnittsebene schneiden. In Hubrichtung H benachbarte Abschnitte 2, 5 kontaktieren einander jeweils, sodass zwischen zwei benachbarten Abschnittsebenen 2, 5 angeordnete erste Teilabschnitte 3 und zweite Teilabschnitte 4 zweier benachbarter Abschnitte 2, 5 sich jeweils paarweise im Punkt des größten Abstands von ihrer Abschnittsebene direkt gegenüber liegen. Dabei berühren sich gegenüberliegende erste und zweite Teilabschnitte 3, 5 sowohl im unbelasteten Zustand als auch im belasteten Zustand (hier nicht gezeigt). Die Abschnitte 2, 5 weisen eine maximale Radialerstreckung in der Radialrichtung R auf, wobei die maximale Radialerstreckung aufeinanderfolgender Abschnitte 2, 5 hier in negativer Hubrichtung streng monoton abnehmend bzw. in diesem Fall konusartig abnehmend ausgebildet ist. In diesem Ausführungsbeispiel hat der Membranzylinder weiterhin ein Zylindergehäuse 16, welches einen Federbereich 12, in dem die Federvorrichtung 1 angeordnet ist, und einen Druckluftbereich 13 aufweist. Bei Einführen von Druckluft in den Druckluftbereich 13 durch den Drucklufteingang 15 wird eine Membran 10 zwischen dem Druckluftbereich 13 und dem Federbereich 12 in Hubrichtung H vorgeschoben, sodass die Federvorrichtung 1 komprimiert wird. Dadurch wird ebenfalls eine Druckstange 14 vorgeschoben, wodurch wiederum eine bzw. die Bremse betätigt wird. Wird die Druckluft aus dem Druckluftbereich 13 herausgelassen, so wird durch die Rückstellkraft der Federvorrichtung 1 die Druckstange 14 zurückgezogen und die Bremse wird gelöst.

**Figur 2** zeigt eine Schnittdarstellung eines Bremszylinders gemäß einer zweiten Ausführungsform der Erfindung. Der Bremszylinder ist in dieser Ausführungsform ein Doppelmembranzylinder. Der Doppelmembranzylinder weist eine erste Federvorrichtung 21 und eine zweite Federvorrichtung 31 auf. Die Federvorrichtungen 21, 31 sind grundsätzlich analog zu der in Figur 1 gezeigten Federvorrichtung 1 aufgebaut. Die Abschnitte 25 der ersten Federvorrichtung 21 weisen ebenfalls eine maximale Radialerstreckung in der Radialrichtung R auf, wobei die maximale Radialerstreckung aufeinanderfolgender Abschnitte 25 in negativer Hubrichtung H streng monoton abnehmend bzw. in diesem Fall konusartig abnehmend ausgebildet ist. Die Abschnitte 35 der zweiten Federvorrichtung 31 weisen hingegen eine konstante maximale Radialerstreckung in der Radialrichtung R auf, sodass die zweite Federvorrichtung zylindrisch ausgebildet ist. Der Doppelmembranzylinder hat ein Zylindergehäuse 16, welches einen ersten Federbereich 22, in dem die erste Federvorrichtung 21 angeordnet ist, einen zweiten Federbereich 32, in dem die zweite Federvorrichtung 31 angeordnet ist, einen ersten Druckluftbereich 23 und einen zweiten Druckluftbereich 33 aufweist. Bei Einführen von Druckluft in den ersten Druckluftbereich 23 wird eine Membran 10 zwischen dem ersten Druckluftbereich 23 und dem ersten Federbereich 22 in Hubrichtung H vorgeschoben, sodass die Federvorrichtung 21 komprimiert wird. Dadurch wird ebenfalls eine erste Druckstange 24 vorgeschoben, wodurch wiederum eine Bremse betätigt wird. Wird die Druckluft aus dem ersten Druckluftbereich 23 herausgelassen, so wird durch die Rückstellkraft der Federvorrichtung 21 die Druckstange 24 zurückgezogen und die Bremse wird gelöst. Der rechte Teil des Doppelmembranzylinders dient hingegen hier als Feststellbremse. Diese ist nicht aktiviert, wenn in dem Druckluftbereich 33 Druckluft ist und somit die Federvorrichtung 31 komprimiert ist. Ist die Federvorrichtung hingegen nicht komprimiert, so wirkt sie über die zweite Druckstange Druck auf die Membran 10 und damit auf die erste Federvorrichtung 21 aus, wodurch die erste Federvorrichtung 21 komprimiert, die erste Druckstange 24 in Hubrichtung H vorgeschoben und die Bremse aktiviert wird.

### Bezugszeichenliste:

- 1: - Federvorrichtung
- 2: - erster Abschnitt
- 3: - erster Teilabschnitt
- 4: - zweiter Teilabschnitt
- 5: - weiterer Abschnitt
- 6: - Zwischenabschnitt
- 12: - Federbereich
- 13: - Druckluftbereich
- 14: - Druckstange
- 15: - Drucklufteingang
- 16: - Zylindergehäuse
- 21: - erste Federvorrichtung
- 22: - erster Federbereich
- 23: - erster Druckluftbereich
- 24: - erste Druckstange
- 25: - Abschnitte der ersten Federvorrichtung
- 31: - zweite Federvorrichtung
- 32: - zweiter Federbereich
- 33: - zweiter Druckluftbereich
- 34: - zweite Druckstange
- 35: - Abschnitte der zweiten Federvorrichtung
- H: - Hubrichtung
- R: - Radialrichtung
- U: - Umfangsrichtung

## Patentansprüche

1. Bremszylinder für eine Fahrzeugbremse, insbesondere Nutzfahrzeugbremse, umfassend eine Federvorrichtung (1), wobei die Federvorrichtung eine Wellenfeder ist,
wobei der Bremszylinder ein Membranzylinder oder ein Doppelmembranzylinder ist,
**dadurch gekennzeichnet, dass** die Federvorrichtung (1) dazu ausgestaltet ist, eine Bremskraft und/oder einer Rückstellkraft zum Lösen einer Bremse in einer Hubrichtung des Bremszylinders zu erzeugen.

2. Bremszylinder gemäß Anspruch 1,
wobei die Federvorrichtung (1) zum Erzeugen einer Bremskraft und/oder einer Rückstellkraft zum Lösen einer Bremse in einer Hubrichtung (H) des Bremszylinders zumindest einen ersten Abschnitt (2) aufweist,
wobei der erste Abschnitt (2) eine sich im Wesentlichen auf einer ersten Abschnittsebene erstreckende Grunderstreckung aufweist,
wobei eine Normale der ersten Abschnittsebene im Wesentlichen parallel zu der Hubrichtung (H) ausgerichtet ist und/oder um maximal 10° von der Hubrichtung (H) abweicht,
wobei der erste Abschnitt (2) entlang seiner Grunderstreckung, insbesondere abwechselnd, erste Teilabschnitte (3) und zweite Teilabschnitte (4) aufweist,
wobei die ersten Teilabschnitte (3) im unbelasteten Zustand in positiver Hubrichtung (H) von der ersten Abschnittsebene beabstandet sind, und wobei die zweiten Teilabschnitte (4) im unbelasteten Zustand in negativer Hubrichtung (H) von der ersten Abschnittsebene beabstandet sind,
wobei die ersten und zweiten Teilabschnitte (3, 4) dazu ausgestaltet sind,
im belasteten Zustand unter Erzeugung einer Federkraft einen geringeren Abstand zu der ersten Abschnittsebene aufzuweisen als im unbelasteten Zustand.

3. Bremszylinder gemäß Anspruch 2,
wobei der erste Abschnitt (2) zumindest einen Zwischenabschnitt (6) umfasst, der einen der ersten Teilabschnitte (3) mit einem der zweiten Teilabschnitte (4), insbesondere elastisch, verbindet und der die erste Abschnittsebene schneidet,
wobei der erste Abschnitt (2) insbesondere eine Vielzahl von Zwischenabschnitten (6) umfasst, die jeweils in Richtung der Grunderstreckung aufeinanderfolgende erste und zweite Teilabschnitte (3, 4) verbinden.

4. Bremszylinder gemäß einem der Ansprüche 2 bis 3,
wobei der erste Abschnitt (2) und/oder ein oder mehrere weitere Abschnitte (5) der Federvorrichtung (1) im Wesentlichen als gewellte Ringe und/oder Ringscheiben ausgebildet sind,
wobei Wellenbäuche der gewellten Ringe und/oder Ringscheiben den ersten und zweiten Teilabschnitten (3, 4) entsprechen,
wobei die Ringe und/oder Ringscheiben insbesondere derart angeordnet sind, dass der Mittelpunkt der Ringe/Ringscheiben im Wesentlichen auf einer in Hubrichtung (H) orientierten Verschiebeachse des Bremszylinders angeordnet ist.

5. Bremszylinder gemäß einem der Ansprüche 2 bis 4,
wobei die Federvorrichtung (1) zumindest einen weiteren Abschnitt (5), insbesondere eine Vielzahl weiterer Abschnitte (5), entsprechend dem ersten Abschnitt (2) aufweist,
wobei der erste Abschnitt (2) und der zumindest eine weitere Abschnitt (5) in Hubrichtung (H) hintereinander, insbesondere aneinander angrenzend, angeordnet sind.

6. Bremszylinder gemäß Anspruch 5,
wobei in Hubrichtung (H) benachbarte Abschnitte (2, 5) jeweils einander kontaktieren und/oder miteinander verbunden sind.

7. Bremszylinder gemäß einem der Ansprüche 5 bis 6,
wobei zwischen zwei benachbarten Abschnittsebenen angeordnete erste und zweite Teilabschnitte (3, 4) zweier benachbarter Abschnitte (2, 5) sich jeweils paarweise, insbesondere im Punkt des größten Abstands von ihrer Abschnittsebene, direkt gegenüber liegen,
wobei insbesondere sich gegenüberliegende erste und zweite Teilabschnitte (3, 4) sich im unbelasteten und belasteten Zustand kontaktieren.

8. Bremszylinder gemäß einem der Ansprüche 5 bis 7,
wobei die Abschnitte (2, 5) auf den Abschnittsebenen eine maximale Radialerstreckung in einer zu der Hubrichtung (H) senkrechten Radialrichtung (R) aufweisen,
wobei die maximale Radialerstreckung aufeinanderfolgender Abschnitte (2, 5) in positiver oder negativer Hubrichtung (H) monoton, insbesondere streng monoton, abnehmend ausgebildet ist,
wobei die Federvorrichtung (1) insbesondere konusartig mit einer im Wesentlichen in Hubrichtung (H) verlaufenden Konusachse ausgebildet ist.

9. Bremszylinder gemäß einem der Ansprüche 5 bis 8,
wobei die Abschnitte (2, 5) auf den Abschnittsebenen eine maximale Radialerstreckung in einer zu der Hubrichtung (H) senkrechten Radialrichtung (R) aufweisen,
wobei die maximale Radialerstreckung aufeinanderfolgender Abschnitte (2, 5) in positiver oder negativer Hubrichtung (H) gleich ausgebildet ist, insbesondere derart, dass die Federvorrichtung (1) zylindrisch mit einer im Wesentlichen in Hubrichtung (H) verlaufenden Zylinderachse ausgebildet ist.

10. Bremszylinder gemäß einem der vorhergehenden Ansprüche,
wobei der Bremszylinder zwei Federvorrichtungen jeweils gemäß einem der vorhergehenden Ansprüche umfasst,
wobei die Federvorrichtungen in Hubrichtung (H) zueinander beabstandet sind.

11. Bremszylinder gemäß Anspruch 8 und/oder 9 und/oder 10,
wobei der Bremszylinder eine konusartige Federvorrichtung (21) und eine zylindrische Federvorrichtung (31) umfasst.

12. Bremszylinder gemäß einem der vorhergehenden Ansprüche,
wobei im unbelasteten Zustand ein Durchmesser der Federvorrichtung (1) in Radialrichtung (R) zu einer Erstreckung der Federvorrichtung (1) in Hubrichtung (H) in einem Verhältnis von 0,5 bis 5, bevorzugt 1 bis 3, besonders bevorzugt 1,1 bis 2,0, steht.

13. Fahrzeugbremse, insbesondere Nutzfahrzeugbremse, mit einem Bremszylinder gemäß einem der vorhergehenden Ansprüche.

14. Verwendung einer Wellenfeder in einem Bremszylinder gemäß einem der Ansprüche 1 bis 12 für eine Nutzfahrzeugbremse.

## Claims

1. Brake cylinder for a vehicle brake, in particular a commercial vehicle brake, comprising a spring device (1), wherein the spring device is a wave spring, wherein the brake cylinder is a diaphragm cylinder or a double diaphragm cylinder,
**characterized in that** the spring device (1) is designed to generate a braking force and/or a restoring force for releasing a brake in a stroke direction of the brake cylinder.

2. Brake cylinder according to claim 1,
wherein the spring device (1) for generating a braking force and/or a restoring force for releasing a brake in a stroke direction (H) of the brake cylinder has at least a first section (2),
wherein the first section (2) has a basic extension extending substantially on a first section plane,
wherein a normal to the first section plane is aligned substantially parallel to the stroke direction (H) and/or deviates by a maximum of 10° from the stroke direction (H),
wherein the first section (2) has first partial sections (3) and second partial sections (4) along its basic extension, in particular alternately,
wherein the first partial sections (3) are spaced apart from the first section plane in the positive stroke direction (H) in the unloaded state, and wherein the second partial sections (4) are spaced apart from the first section plane in the negative stroke direction (H) in the unloaded state, wherein the first and second partial sections (3, 4) are designed such that, , in the loaded state, they have a smaller distance to the first section plane than in the unloaded state, generating a spring force.

3. Brake cylinder according to claim 2,
wherein the first section (2) comprises at least one intermediate section (6) which connects one of the first partial sections (3) to one of the second partial sections (4), in particular elastically, and which intersects the first section plane,
wherein the first section (2) comprises, in particular, a plurality of intermediate sections (6) which each connect successive first and second partial sections (3, 4) in the direction of the basic extension.

4. Brake cylinder according to any one of claims 2 to 3,
wherein the first section (2) and/or one or more further sections (5) of the spring device (1) are essentially designed as corrugated rings and/or ring discs,
wherein corrugation crests of the corrugated rings and/or ring discs correspond to the first and second sections (3, 4),
wherein the rings and/or ring discs are arranged in particular such that the center point of the rings/ring discs is essentially located on a displacement axis of the brake cylinder oriented in the stroke direction (H).

5. Brake cylinder according to any one of claims 2 to 4,
wherein the spring device (1) has at least one further section (5), in particular a plurality of further sections (5), corresponding to the first section (2),
wherein the first section (2) and the at least one further section (5) are arranged one behind the other in the stroke direction (H), in particular adjacent to one another.

6. Brake cylinder according to claim 5,
wherein sections (2, 5) adjacent in the stroke direction (H) each contact and/or are connected to one another.

7. Brake cylinder according to any one of claims 5 to 6,
wherein first and second partial sections (3, 4) of two adjacent sections (2, 5) arranged between two adjacent section planes are directly opposite each other in pairs, in particular at the point of greatest distance from their section plane,
wherein, in particular, opposing first and second partial sections (3, 4) are in contact with each other in the unloaded and loaded state.

8. Brake cylinder according to any one of claims 5 to 7,
wherein the sections (2, 5) have a maximum radial extension in a radial direction (R) perpendicular to the stroke direction (H) on the section planes, wherein the maximum radial extension of successive sections (2, 5) in the positive or negative stroke direction (H) is designed to decrease monotonically, in particular strictly monotonically,
wherein the spring device (1) is designed in particular to be conical with a cone axis extending essentially in the stroke direction (H).

9. Brake cylinder according to any one of claims 5 to 8,
wherein the sections (2, 5) on the section planes have a maximum radial extension in a radial direction (R) perpendicular to the stroke direction (H), wherein the maximum radial extension of successive sections (2, 5) in the positive or negative stroke direction (H) is designed to be the same, in particular such that the spring device (1) is designed to be cylindrical with a cylinder axis extending substantially in the stroke direction (H).

10. Brake cylinder according to any one of the preceding claims,
wherein the brake cylinder comprises two spring devices each according to any one of the preceding claims,
wherein the spring devices are spaced apart from each other in the stroke direction (H).

11. Brake cylinder according to claim 8 and/or 9 and/or 10,
wherein the brake cylinder comprises a cone-shaped spring device (21) and a cylindrical spring device (31).

12. Brake cylinder according to any one of the preceding claims,
wherein, in the unloaded state, a diameter of the spring device (1) in the radial direction (R) is in a ratio of 0.5 to 5, preferably 1 to 3, particularly preferably 1.1 to 2.0, to an extension of the spring device (1) in the stroke direction (H).

13. Vehicle brake, in particular commercial vehicle brake, with a brake cylinder according to any one of the preceding claims.

14. Use of a wave spring in a brake cylinder according to any one of claims 1 to 12 for a commercial vehicle brake.

## Revendications

1. Cylindre de frein pour un frein de véhicule, en particulier un frein de véhicule utilitaire, comprenant un dispositif à ressort (1), le dispositif à ressort étant en particulier un ressort ondulé,
le cylindre de frein étant un cylindre à membrane ou un cylindre à double membrane,
**caractérisé en ce que**
le dispositif à ressort (1) est conçu pour générer une force de freinage et/ou une force de rappel pour desserrer un frein dans une direction de course du cylindre de frein.

2. Cylindre de frein selon la revendication 1,
dans lequel le dispositif à ressort (1) conçu pour générer une force de freinage et/ou une force de rappel pour desserrer un frein dans une direction de course (H) du cylindre de frein comprend au moins une première portion (2),
la première portion (2) présente une extension de base s'étendant sensiblement sur un premier plan de la portion,
une normale au premier plan de la portion est orientée sensiblement parallèlement à la direction de course (H) et/ou s'écarte de 10° au maximum de la direction de course (H),
la première portion (2) présente, le long de son extension de base, en particulier en alternance, des premières portions partielles (3) et des deuxièmes portions partielles (4),
les premières portions partielles (3) sont espacées du premier plan de la portion dans le sens positif de la direction de course (H), à l'état non chargé, et
les deuxièmes portions partielles (4) sont espacées du premier plan de la portion dans le sens négatif de la direction de course (H), à l'état non chargé,
les premières et deuxièmes portions partielles (3, 4) sont conçues pour présenter une distance par rapport au premier plan de la portion, qui, à l'état chargé, générant une force élastique, est plus petite que celle à l'état non chargé.

3. Cylindre de frein selon la revendication 2,
dans lequel la première portion (2) comprend au moins une portion intermédiaire (6) qui relie, en particulier de manière élastique, l'une des premières portions partielles (3) à l'une des deuxièmes portions partielles (4) et qui coupe le premier plan de la portion,
en particulier, la première portion (2) comprend une pluralité de portions intermédiaires (6) qui relient respectivement des premières et deuxièmes portions partielles (3, 4) successives dans la direction de l'extension de base.

4. Cylindre de frein selon l'une des revendications 2 à 3,
dans lequel la première portion (2) et/ou une ou plusieurs autres portions (5) du dispositif à ressort (1) sont conçues sensiblement comme des bagues et/ou rondelles ondulées,
les courbures d'onde des bagues et/ou rondelles ondulées correspondent aux premières et deuxièmes portions partielles (3, 4),
en particulier, les bagues et/ou rondelles ondulées sont disposées de telle sorte que le centre des bagues/rondelles soit disposé sensiblement sur un axe de déplacement du cylindre de frein orienté dans la direction de course (H).

5. Cylindre de frein selon l'une des revendications 2 à 4,
dans lequel le dispositif à ressort (1) comprend au moins une autre portion (5), en particulier une pluralité d'autres portions (5), correspondant à la première portion (2),
la première portion (2) et ladite au moins une autre portion (5) sont disposées l'une derrière l'autre dans la direction de course (H), en particulier de manière adjacente l'une à l'autre.

6. Cylindre de frein selon la revendication 5,
dans lequel des portions (2, 5) voisines dans la direction de course (H) sont en contact l'une avec l'autre et/ou reliées entre elles.

7. Cylindre de frein selon l'une des revendications 5 à 6,
dans lequel des premières et deuxièmes portions partielles (3, 4), disposées entre deux plans de portion voisins, de deux portions voisines (2, 5) sont directement opposées les unes aux autres en formant des paires respectives, en particulier au point de la plus grande distance par rapport à leur plan de portion,
en particulier, des premières et deuxièmes portions partielles (3, 4) opposées les unes aux autres se touchent à l'état non chargé et à l'état chargé.

8. Cylindre de frein selon l'une des revendications 5 à 7,
dans lequel les portions (2, 5) présentent, sur les plans de portion, une extension radiale maximale dans une direction radiale (R) perpendiculaire à la direction de course (H),
l'extension radiale maximale de portions successives (2, 5) est conçue de manière à diminuer de façon monotone, en particulier strictement monotone, dans le sens positif ou négatif de la course (H),
en particulier, le dispositif à ressort (1) est conçu en forme de cône avec un axe de cône s'étendant sensiblement dans la direction de course (H).

9. Cylindre de frein selon l'une des revendications 5 à 8,
dans lequel les portions (2, 5) présentent, sur les plans de portion, une extension radiale maximale dans une direction radiale (R) perpendiculaire à la direction de course (H),
l'extension radiale maximale de portions successives (2, 5) est identique dans le sens positif ou négatif de la course (H), en particulier de telle sorte que le dispositif à ressort (1) est cylindrique avec un axe de cylindre s'étendant sensiblement dans la direction de course (H).

10. Cylindre de frein selon l'une des revendications précédentes,
dans lequel le cylindre de frein comprend deux dispositifs à ressort selon l'une des revendications précédentes,
les dispositifs à ressort sont espacés l'un de l'autre dans la direction de course (H).

11. Cylindre de frein selon la revendication 8 et/ou 9 et/ou 10,
dans lequel le cylindre de frein comprend un dispositif à ressort (21) en forme de cône et un dispositif à ressort (31) cylindrique.

12. Cylindre de frein selon l'une des revendications précédentes,
dans lequel, à l'état non chargé, le rapport du diamètre du dispositif à ressort (1) dans la direction radiale (R) sur l'extension du dispositif à ressort (1) dans la direction de course (H) est dans une plage de 0,5 à 5, de préférence de 1 à 3, de manière particulièrement préférée de 1,1 à 2,0.

13. Frein de véhicule, en particulier frein de véhicule utilitaire, comprenant un cylindre de frein selon l'une des revendications précédentes.

14. Utilisation d'un ressort ondulé dans un cylindre de frein selon l'une des revendications 1 à 12 pour un frein de véhicule utilitaire.
